Europäisches Patentamt

European Patent Office

Office européen des brevets

(11) Numéro de publication : **0 193 690**
**B1**

# FASCICULE DE BREVET EUROPÉEN

(45) Date de publication du fascicule du brevet :
15.03.89

(21) Numéro de dépôt : 85401711.8

(22) Date de dépôt : 03.09.85

(51) Int. Cl.⁴ : **F 16 J 15/44, H 02 K 5/10**

(54) **Dispositif de liaison entre un moteur lubrifié et une machine électrique tournante.**

(30) Priorité : **28.02.85 FR 8502968**

(43) Date de publication de la demande :
**10.09.86 Bulletin 86/37**

(45) Mention de la délivrance du brevet :
**15.03.89 Bulletin 89/11**

(84) États contractants désignés :
**DE GB IT SE**

(56) Documents cités :
**DE--A-- 2 505 554**
**FR--A-- 1 192 227**
**GB--A-- 1 179 440**
**US--A-- 2 306 724**
**US--A-- 2 319 549**
**US--A-- 3 493 776**

(73) Titulaire : **AUXILEC**
**188, rue d'Estienne d'Orves**
**F-92700 Colombes (FR)**

(72) Inventeur : **Attane, Jacques**
**THOMSON-CSF SCPI 173, bld Haussmann**
**F-75379 Paris Cedex 08 (FR)**

(74) Mandataire : **Grynwald, Albert et al**
**THOMSON-CSF SCPI 19, avenue de Messine**
**F-75008 Paris (FR)**

## Description

L'invention est relative à un dispositif de liaison entre un moteur lubrifié et une machine électrique tournante, ce dispositif comprenant un écran pour empêcher la propagation du lubrifiant vers la machine électrique.

Dans les avions ou hélicoptères le démarrage du compresseur de la turbine est effectué à l'aide d'un moteur électrique qui, après le démarrage, est utilisé comme générateur d'électricité. En général le compresseur tourne à une vitesse nettement supérieure à celle que pourrait supporter le moteur-générateur (ci-après dénommé démarreur pour simplifier). C'est pourquoi on prévoit entre ces deux organes tournants un dispositif à engrenages qui fonctionne comme multiplicateur de vitesse lors du démarrage et comme réducteur en fonctionnement normal.

Le fonctionnement du démarreur pourrait être perturbé par les fuites d'huile de lubrification du dispositif à engrenages.

Jusqu'à présent, pour empêcher ces fuites, il est généralement connu de faire appel à un écran monté sur l'arbre de sortie du démarreur qui ferme, d'un côté, une cavité à l'extrémité du carter du dispositif à engrenages, et cette cavité présente, à sa partie inférieure, un trou de drainage pour l'évacuation du lubrifiant. Cet écran en forme de disque forme par exemple l'armature d'un amortisseur de vibrations en torsion.

Mais on a constaté que ces mesures pouvaient, pour des fuites importantes, être d'une efficacité insuffisante.

L'invention permet de diminuer dans une mesure importante les risques de propagation de l'huile de lubrification vers le démarreur.

Elle est caractérisée en ce que l'écran tournant présente une saillie dirigée vers l'intérieur de la cavité et disposée pour dévier vers le trou de drainage les particules de lubrifiant s'échappant de la périphérie de l'arbre du dispositif à engrenage. L'invention résulte en effet de la constatation que, dans les dispositifs de liaison de la technique antérieure, les particules de lubrifiant s'échappent de la périphérie de l'arbre et sont entraînées à la périphérie de l'écran par la force centrifuge résultant de la rotation, et elles contournent ainsi l'écran et se propagent vers le démarreur par l'intervalle qu'il est nécessaire de ménager entre la périphérie de cet écran tournant et la surface interne d'une bride de fixation montée à l'extrémité du carter du dispositif à engrenages.

Il est certes déjà connu par le Brevet US 2 319 549 de prévoir une paroi tournante avec une saillie, mais la saillie de cette antériorité n'a pas la fonction de la saillie de l'écran de l'invention, c'est-à-dire de dévier vers le trou de drainage des particules de lubrifiant s'échappant d'un dispositif à engrenages.

Dans un mode de réalisation préféré la saillie est cylindrique de même axe que l'arbre. Dans ce cas, pour diminuer encore les risques de propagation du lubrifiant, la bride de fixation du démarreur se termine par un nez pénétrant dans la cavité et à ce nez est rattachée, vers l'intérieur de la cavité, une paroi présentant une ouverture dont le bord est séparé par une faible distance, par exemple de l'ordre de 0,8 mm, de la périphérie de la paroi cylindrique en saillie de l'écran tournant. On forme ainsi entre la périphérie de l'arbre et la périphérie de l'écran un trajet en chicane qui rend effectivement plus difficile la propagation des particules vers la périphérie de l'écran. En outre la paroi de la bride de fixation du démarreur augmente, à la partie inférieure, le volume de lubrifiant qui peut être accumulé, avant son évacuation par le trou de drainage, ce qui diminue encore les risques de propagation vers le démarreur.

Dans une réalisation l'ouverture de la paroi de la bride de fixation du démarreur présente, dirigé vers le dispositif à engrenages, un rebord en forme de goulotte pour guider vers le trou de drainage les particules projetées par la force centrifuge contre cette paroi.

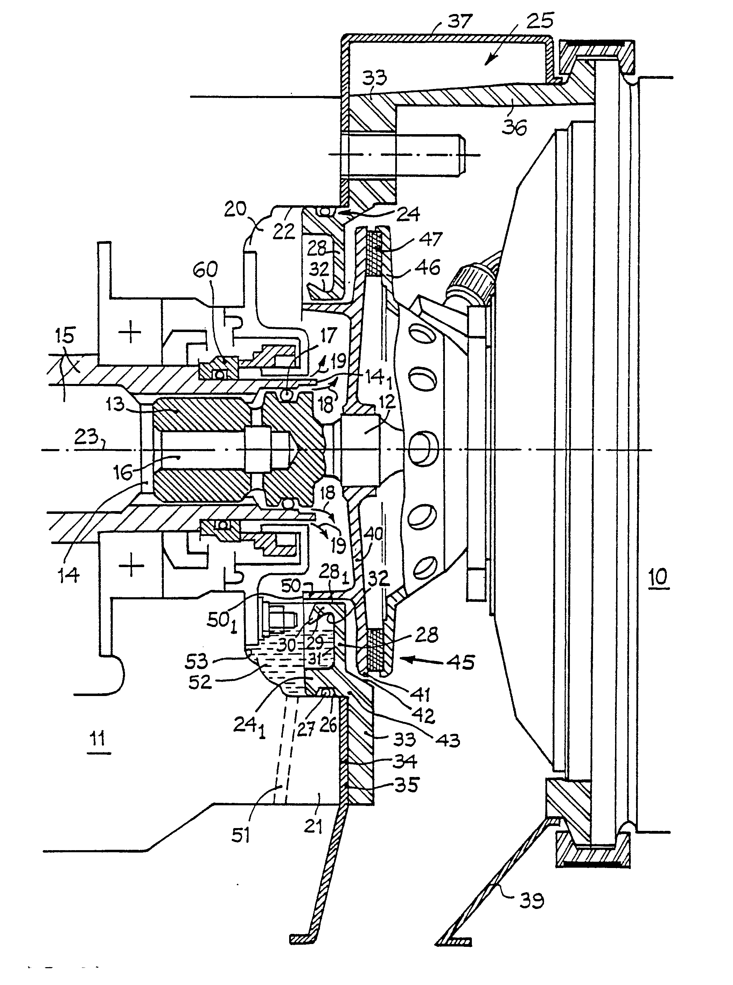

D'autres caractéristiques et avantages de l'invention apparaîtront avec la description de l'un de ses modes de réalisation, celle-ci étant effectuée en se référant à la figure unique qui est un schéma en coupe axiale d'un dispositif de liaison conforme à l'invention, le démarreur et le dispositif réducteur-multiplicateur à engrenages étant représentés partiellement.

L'exemple qui va être décrit se rapporte à un démarreur électrique pour turbine de moteur d'avion ou d'hélicoptère, ce démarreur fonctionnant aussi comme générateur d'électricité après le démarrage.

Sur la figure on a représenté l'extrémité du moteur électrique 10 de démarrage ainsi que l'extrémité du dispositif réducteur-multiplicateur à engrenages 11 interposé entre le démarreur 10 et le compresseur (non représenté) de la turbine de l'avion.

La liaison de l'arbre de sortie 12 du démarreur 10 à l'arbre du dispositif 11 est obtenue en prévoyant que l'arbre 12 présente une extrémité 13 à cannelures de direction axiale pénétrant dans des rainures complémentaires à l'intérieur d'une ouverture 14 à l'extrémité de l'arbre 15 du dispositif 11. En outre l'arbre 12 présente une cavité d'extrémité 16 destinée à assurer la lubrification des cannelures de l'extrémité 13 de l'arbre 12. Au voisinage de l'extrémité de l'arbre 15 on prévoit, entre la surface interne de l'ouverture 14 et l'arbre 12, un joint d'étanchéité 17 pour empêcher la propagation de l'huile de lubrification du dispositif 11 vers le démarreur 10. Mais des fuites sont habituellement inévitables. On a d'ailleurs représenté par les flèches 18 la direction et le sens des fuites d'huile provenant de l'ouverture ou cavité 14. De l'huile s'échappe aussi en général par la périphérie de l'arbre 15 comme représenté par les flèches 19 ; cette huile provient d'un joint tournant 60 monté sur l'arbre 15.

L'arbre 15 se termine à l'intérieur d'une cavité centrale 20 que présente l'extrémité 21 du carter du dispositif 11. Cette cavité 20 est limitée par une paroi cylindrique 22 de même axe 23 que les arbres 12 et 15 et reçoit l'extrémité 24 d'une bride 25 de fixation du démarreur 10.

L'extrémité 24 a la forme d'un nez à surface externe cylindrique avec une rainure périphérique 26 logeant un joint d'étanchéité 27 s'appliquant aussi contre la surface cylindrique 22.

A la paroi cylindrique 24₁ de l'extrémité de la bride est rattachée, selon l'invention, une paroi 28 perpendiculaire à l'axe 23 avec une ouverture circulaire 28₁ de diamètre sensiblement supérieur au diamètre extérieur de l'arbre 15 à son extrémité. L'ouverture 28₁ présente, vers l'intérieur de la cavité 20, un rebord 29 avec un retour 30 s'éloignant de l'axe 23 de façon que soit délimitée, entre la face 31 de la paroi 28 qui est dirigée vers la cavité 20 et ce retour 30, une goulotte 32 dont le rôle sera expliqué plus loin.

L'extrémité 24 de la bride 25 est rattachée à une paroi 33, faisant également partie de la bride 25, qui est appliquée contre la face d'extrémité 34 du carter 21 du dispositif 11 par l'intermédiaire d'une plaque de tôle 35 — qu'elle fixe contre la face 34 — faisant partie d'un capot 37. La paroi 33 est connectée à l'extrémité du boîtier du démarreur 10 par des bras 36 formant un manchon et qui sont entourés par le capot 37 en tôle se terminant par ladite plaque 35. Ce capot 37 est ouvert à sa partie inférieure et se prolonge par une cheminée d'aération 39 d'une seule pièce avec ce capot 37 et la plaque 35.

L'arbre 12 porte, à l'arrière de l'extrémité cannelée 13, un disque 40 de diamètre extérieur légèrement inférieur à celui de l'ouverture 22 avec une périphérie 41 à faible distance d'une face 42 en biseau limitant la partie de connexion 43 du nez 24 à la paroi 33.

Le disque 40 forme une armature d'un amortisseur 45 qui comporte une seconde armature 46 avec une couronne sensiblement de même diamètre extérieur que le disque 40 et séparée de ce dernier par l'élément actif 47 d'amortissement en torsion.

Conformément à l'invention du disque 40, qui constitue un écran fermant la cavité 20 pour s'opposer à la propagation des particules de lubrifiant vers le démarreur 10, est en saillie, vers l'intérieur de la cavité 20, une paroi cylindrique 50 d'axe 23, de diamètre extérieur très légèrement inférieur au diamètre de l'ouverture 28₁. Dans l'exemple la distance entre la surface externe du cylindre 50 et le bord de l'ouverture 28₁ est de l'ordre de 0,8 mm. Dans cet exemple la distance séparant la paroi 28 du disque 40 est de l'ordre de 3 mm et la paroi cylindrique 50 est, à l'intérieur de la cavité 20, légèrement en saillie par rapport au rebord 29. L'arbre 15 est en saillie à l'intérieur de la cavité 20 dans une mesure telle que son extrémité 14₁ est plus rapprochée du démarreur 10 que l'extrémité 50₁ de la paroi 50.

Enfin, à sa partie inférieure, l'extrémité du carter 21 comporte un trou de drainage 51 pour évacuer l'huile 52 qui peut s'accumuler à la partie inférieure de la cavité 20. Dans cette partie inférieure la cavité 20 forme ainsi un réservoir limité par une paroi verticale qui est constituée par la partie inférieure de la paroi 28 et une autre paroi verticale 53 du carter 21.

Le fonctionnement est le suivant :

Lorsque des fuites de lubrifiant se produisent des gouttelettes d'huile s'échappent du dispositif 11 avec un parcours qui débute selon les flèches 18 et 19. La rotation provoque une force centrifuge qui projette ces gouttelettes sur la surface interne de la paroi cylindrique 50 et vers la surface 22 (non tournante) ainsi que vers la face interne de la paroi 28, également non tournante. En partie supérieure l'huile a tendance à se rassembler dans la goulotte 32 d'où elle est guidée vers la partie inférieure pour se déverser dans le réservoir susmentionné d'où elle est évacuée par le trou de drainage 51.

Ainsi la paroi 50 constitue un obstacle s'opposant à la propagation de l'huile vers la périphérie 41 du disque 40, c'est-à-dire vers le démarreur 10.

En outre cette paroi cylindrique 50 avec le rebord 29 constitue une chicane s'opposant aussi à la propagation de l'huile vers le démarreur 10. Il est à noter aussi que la paroi 28, qui n'était pas prévue dans les dispositifs de liaison de la technique antérieure, augmente le volume du réservoir d'accumulation d'huile à la partie inférieure, ce qui est également favorable à la minimisation de la propagation. Enfin l'invention s'oppose aussi à la propagation de l'huile vers le démarreur 10 quand le moteur est à l'arrêt.

## Revendications

1. Dispositif de liaison entre une machine électrique tournante (10) et un dispositif lubrifié à engrenages (11), du type réducteur ou multiplicateur, comprenant, solidaire de l'arbre de sortie (12) de la machine électrique, un écran (40) qui, pour s'opposer à la propagation, vers la machine électrique (10), des éventuelles fuites de lubrifiant au voisinage de l'arbre du dispositif à engrenages (11), ferme, d'un côté, une cavité (20) à l'extrémité du carter (21) de ce dispositif à engrenages (11), cette cavité présentant, à sa partie inférieure, un trou (51) de drainage pour l'évacuation des fuites de lubrifiant, caractérisé en ce que l'écran tournant (40) présente une saillie (50) dirigée vers l'intérieur de la cavité (20) et disposée pour dévier vers le trou de drainage les particules de lubrifiant s'échappant du dispositif à engrenages (11).

2. Dispositif selon la revendication 1, caractérisé en ce que la saillie est constituée par une paroi cylindrique de même axe (23) que l'arbre (12) de la machine électrique.

3. Dispositif selon la revendication 2, caractérisé en ce que la machine électrique (10) comporte une bride (25) de fixation au dispositif à engrenages, ladite bride se terminant par un nez d'extrémité (24) pénétrant dans la cavité (20), et en ce qu'à ce nez (24) est rattachée, vers l'intérieur de la cavité, une paroi (28) présentant une ouverture (28₁) dont le bord est séparé par une faible distance, par exemple de l'ordre de 0,8 mm, de la périphérie de la paroi cylindrique (50) en saillie de l'écran tournant.

4. Dispositif selon la revendication 3, caractérisé en ce que l'ouverture (28₁) de la paroi (28) solidaire du nez (24) présente un rebord (29) dirigé vers le dispositif à engrenages (11).

5. Dispositif selon la revendication 4, caractérisé en ce que le rebord (29) présente une extrémité (30) recourbée vers l'extérieur de manière à former une goulotte (32) de guidage du lubrifiant vers le trou de drainage (51).

6. Dispositif selon la revendication 4 ou 5, caractérisé en ce que, dans la cavité (20), la paroi cylindrique (50) en saillie de l'écran dépasse du rebord (29) en direction du dispositif à engrenages (11).

7. Dispositif selon l'une quelconque des revendications précédentes, caractérisé en ce que la partie tournante (15) du dispositif à engrenages (11) étant en saillie à l'intérieur de la cavité (20), l'extrémité de la saillie (50) de l'écran (40) dépasse, en direction du dispositif (11) à engrenages, de la partie tournante (15) de ce dernier.

8. Dispositif selon l'une quelconque des revendications précédentes, caractérisé en ce que, de façon en soi connue, l'écran (40) constitue une armature d'un amortisseur (45) de vibrations en torsion.

9. Application du dispositif selon l'une quelconque des revendications précédentes à la liaison entre une machine électrique démarreur-générateur et un moteur d'avion ou d'hélicoptère.

**Claims**

1. A connecting device between an electric rotating machine (10) and a lubricated gear device (11) of the gearing-down or gearing-up type, comprising a screen (40) which is secured to the output shaft (12) of the electric machine and which, in order to avoid propagation of casual lubricant leaks in the vicinity of the shaft of the gear device (11) towards the electric machine (10), closes on one side a cavity (20) at the end of the carter (21) of the gear device (11), this cavity having in its lower part a drain hole (51) conceived to evacuate lubricant leaks, characterized in that the rotating screen (40) is provided with a projection (50) directed towards the inside of the cavity (20) and conceived to deviate the lubricant particles escaping from the gear device (11) towards the drain hole.

2. A device according to claim 1, characterized in that the projection is constituted by a cylindrical wall having the same axis (23) as the shaft (12) of the electric machine.

3. A device according to claim 2, characterized in that the electric machine (10) comprises a flange (25) for securing it to the gear device, said flange terminating by an end nose (24) which penetrates into the cavity (20), and that to this nose (24) a wall (28) is attached towards the inside of the cavity, this wall having an opening (28₁) whose edge is spaced by a small distance, for example of about 0,8 mm, from the periphery of the projecting cylindrical wall (50) of the rotating screen.

4. A device according to claim 3, characterized in that the opening (28₁) in the wall (28) which is integral with the nose (24) is provided with a rim (29) directed towards the gear device (11).

5. A device according to claim 4, characterized in that the rim (29) presents an end (30) which is curved towards the outside in order to constitute a spout (32) which guides the lubricant towards the drain hole (51).

6. A device according to claim 4 or 5, characterized in that the projecting cylindrical wall (50) of the screen (40) extends in the cavity (20) beyond the rim (29) towards the gear device (11).

7. A device according to any one of the preceding claims, characterized in that the rotating assembly (15) of the gear device (11) projecting into the cavity (20), the end of the projection (50) of the screen (40) extends beyond the rotating assembly (15) of the gear device (11) in the direction of the latter.

8. A device according to any one of the preceding claims, characterized in that the screen (40) constitutes, as it is known per se, an armature of a damper (45) which damps torsion vibrations.

9. Application of the device according to any one of the preceding claims in connection with an electrical starter-generator machine and a motor of an aeroplane or a helicopter.

**Patentansprüche**

1. Vorrichtung zur Verbindung zwischen einer drehenden elektrischen Maschine (10) und einer geschmierten Getriebevorrichtung (11) vom Untersetzungs- oder Übersetzungstyp, mit einer Abschirmung (40), die fest mit der Ausgangswelle (12) der elektrischen Maschine verbunden ist und zur Vermeidung von möglichen Schmiermittellecks in Richtung auf die elektrische Maschine (10) in der Nähe der Welle der Getriebevorrichtung (11) auf einer Seite einen Hohlraum (20) am Ende des Gehäuses (21) der Getriebevorrichtung (11) verschließt, wobei dieser Hohlraum in seinem unteren Bereich ein Loch (51) zur Ableitung der Schmiermittellecks besitzt, dadurch gekennzeichnet, daß die drehende Abschirmung (40) eine ins Innere des Hohlraums (20) vorspringende Rippe (50) aufweist, die so angeordnet ist, daß die Schmiermittelpartikel, die aus der Getriebevorrichtung (11) austreten, in Richtung auf das Ableitungsloch umgelenkt werden.

2. Vorrichtung nach Anspruch 1, dadurch gekennzeichnet, daß die vorspringende Rippe von einer zylindrischen Wand gebildet wird, die dieselbe Achse (23) wie die Welle (12) der elektrischen Maschine besitzt.

3. Vorrichtung nach Anspruch 2, dadurch gekennzeichnet, daß die elektrische Maschine (10) einen Flansch (25) zur Befestigung an der Getriebevorrichtung aufweist, wobei der Flansch in einer Endnase (24) ausläuft, die in den Hohlraum (20) eindringt, und daß an diese Nase (24) in Richtung auf das Innere des Hohlraums eine Wand (28) mit einer Öffnung (28₁) anschließt, deren Rand einen geringen Abstand, von beispielsweise etwa 0,8 mm, zum Umfang der vorstehenden zylindrischen Wand (50) der drehenden Abschirmung besitzt.

4. Vorrichtung nach Anspruch 3, dadurch gekennzeichnet, daß die Öffnung (28₁) in der mit der Nase (24) fest verbundenen Wand (28) einen Wulst (29) aufweist, der sich in Richtung auf die Getriebevorrichtung (11) erstreckt.

5. Vorrichtung nach Anspruch 4, dadurch gekennzeichnet, daß der Wulst (29) ein nach außen gekrümmtes Ende (30) aufweist, das eine Abtropfkante (32) bildet, durch die das Schmiermittel in Richtung auf das Ableitungsloch (51) geführt wird.

6. Vorrichtung nach Anspruch 4 oder 5, dadurch gekennzeichnet, daß die zylindrische vorstehende Wand (50) der Abschirmung in dem Hohlraum (20) über den Wulst (29) in Richtung auf die Getriebevorrichtung (11) vorragt.

7. Vorrichtung nach einem beliebigen der vorhergehenden Ansprüche, dadurch gekennzeichnet, daß, wenn der drehende Teil (15) der Getriebevorrichtung (11) ins Innere des Hohlraums (20) vorsteht, das Ende der vorspringenden Rippe (50) der Abschirmung (40) in Richtung auf die Getriebevorrichtung (11) über die drehenden Teile (15) dieser Vorrichtung vorsteht.

8. Vorrichtung nach einem beliebigen der vorhergehenden Ansprüche, dadurch gekennzeichnet, daß die Abschirmung (40) in an sich bekannter Weise eine Armatur eines Torsionsschwingungsdämpfers (45) bildet.

9. Anwendung der Vorrichtung nach einem beliebigen der vorhergehenden Ansprüche in Verbindung mit einer elektrischen Starter-Generator-Maschine und einem Motor eines Flugzeugs oder Hubschraubers.

EP 0 193 690 B1